# FASCICULE DE BREVET EUROPEEN

(11) **EP 0 654 427 B1**
(45) Date de publication et mention de la délivrance du brevet: **20.05.1998**
(21) Numéro de dépôt: 94402598.0
(22) Date de dépôt: 16.11.1994
(51) Int. Cl.: B65G 21/14, E04G 21/04, B28C 5/42

(54) **Tapis transporteur, notamment pour camion-bétonnière**
Bandförderer, insbesondere für einen Transportbetonmischer
Beltconveyer, in particular for a truck-mixer

(30) Priorité: 18.11.1993 FR 9313769
(43) Date de publication de la demande: 24.05.1995
(73) Titulaire: ETS. THENAUD et FILS, F-44340 Bouguenais (FR)
(72) Inventeur: Thenaud, Luc, 44340 Bouguenais (FR)
(74) Mandataire: Colas, Jean-Pierre

(56) Documents cités:
- EP-A- 0 192 193
- EP-A- 0 424 591

## Description

La présente invention est relative à un tapis transporteur adaptable sur un véhicule portant un récipient pour produits granuleux ou pulvérulents, ce récipient comportant un orifice de déversement, et étant par exemple une bétonnière.

Dans leur version la plus répandue encore actuellement, les camions-bétonnières sont pourvus, près de l'orifice de déversement de la bétonnière, d'une simple goulotte qui permet de guider le béton pour le faire tomber dans un récipient qui sera ensuite acheminé au point d'utilisation. Suivant un autre type de réalisation, le camion-bétonnière porte un tapis transporteur capable de transporter le béton à une certaine distance de la bétonnière, par exemple de l'ordre d'une dizaine de mètres, de façon à desservir directement un chantier. Ce tapis transporteur est constitué d'un châssis formé d'au moins trois éléments rigides liés entre eux par des articulations dont les axes sont horizontaux et parallèles entre eux, des vérins étant capables d'agir pour modifier la position relative de ces éléments les uns par rapport aux autres, et le châssis portant une bande transporteuse continue, qui peut acheminer le béton depuis un point de chargement situé au-dessous de l'orifice de déversement de la bétonnière, jusqu'à l'extrémité opposée du châssis. Pour le transport, le châssis est replié de façon à ne faire pratiquement pas saillie sur le gabarit extérieur du véhicule. Au contraire, en position de travail, il prend une disposition d'extension horizontale. Le tapis est relié au véhicule porteur par un système lui permettant de pivoter autour d'un axe vertical, et de s'orienter dans la direction désirée.

En position de travail, les éléments du tapis sont horizontaux ou, avec une pente assez faible, compatible avec la nécessité que le béton en cours de transport ne se déplace pas par rapport à la bande transporteuse. En position de transport, le premier élément du châssis, qui comprend les moyens de réception du béton qui se déverse de la bétonnière, se trouve dans une position sensiblement verticale, avec son extrémité supérieure voisine de la hauteur correspondant au gabarit réglementaire du véhicule. Le deuxième élément est horizontal, en général le long d'un des côtés longitudinaux du véhicule. Le troisième élément est, le plus souvent replié à 180° sous le deuxième élément.

Pour augmenter le rayon d'action du tapis en cours d'utilisation, il a été proposé (FR-A-2.450.175, EP-A-0.424.591) de rendre le deuxième élément télescopique, avec une longueur minimale correspondant à l'espace offert par le véhicule dans la disposition de transport, et par conséquent, une longueur plus grande à l'état déployé. Cette disposition permet d'atteindre des points plus éloignés du véhicule pour y déverser du béton.

Cependant, lorsqu'on travaille dans un chantier relativement encombré, tel qu'un bâtiment en construction, il apparaît que la souplesse d'utilisation est encore insuffisante. En effet, supposons que le tapis doive passer à travers une fenêtre étroite, située à un niveau différent de celui du camion-bétonnière, il est clair que la dernière articulation devra se situer en un point bien défini, tel qu'une embrasure de fenêtre. Cela impose par conséquent que le point de déversement soit à une distance de cette embrasure de fenêtre qui est fonction de la longueur du dernier élément. Cela peut imposer des manoeuvres délicates à l'opérateur.

La présente invention a pour but de résoudre ce problème, et de fournir un tapis transporteur dont la souplesse d'utilisation soit améliorée, par une plus grande maîtrise du point où ledit tapis peut déverser le béton qu'il transporte, Pour obtenir ce résultat, la présente invention fournit un tapis transporteur adaptable sur un véhicule portant un récipient pour produits granuleux ou pulvérulents, ce récipient comportant un orifice de déversement, et étant par exemple une bétonnière, comportant :
- un châssis constitué d'au moins trois éléments rigides reliés entre eux par des articulations dont les axes sont horizontaux et parallèles entre eux, un premier de ces éléments étant muni de moyens qui lui permettent de pivoter sur un axe vertical lié au véhicule et situé àproximité du point de déversement du récipient, et le dernier de ces éléments de châssis portant, à son extrémité, une trémie ou goulotte de déversement,
- des vérins capables d'agir sur les articulations et entre le véhicule et le premier élément du châssis pour faire passer le châssis d'une position de transport, où il est plié avec le premier, et éventuellement le dernier, élément du châssis vertical ou fortement incliné sur la verticale, et où le tapis ne fait à peu près pas saillie sur le gabarit extérieur du véhicule, à une position de travail, où la trémie ou goulotte de déversement est écartée du véhicule,
- une bande transporteuse continue, qui est guidée par des rouleaux montés sur le châssis et placés au moins à chaque extrémité du châssis et à proximité de chaque articulation, l'un de ces rouleaux étant un rouleau d'entraînement de la bande,
- et des moyens pour maintenir la bande transporteuse sous une tension à peu près constante,
   ce tapis ayant pour particularité qu'au moins le dernier élément du châssis est télescopique, et peut s'allonger au-delà de la longueur maximale imposée par le gabarit du véhicule quand le châssis est en disposition de transport.

Le fait que le dernier élément du châssis est télescopique permet de déplacer à volonté le point de déversement du béton sans avoir à déplacer les autres éléments de l'ensemble du tapis, ou le véhicule. Par exemple, on peut faire fonctionner le tapis transporteur en continu, en lui faisant remplir alternativement deux récipients placés l'un à côté de l'autre.

De préférence, au moins un autre élément du châssis est également télescopique, ce qui ajoute encore à la souplesse.

La commande de la longueur du dernier élément peut être réalisée de plusieurs manières :
- suivant un premier mode de réalisation, il est prévu une commande par vérin hydraulique du mouvement télescopique du dernier élément,
- suivant un deuxième mode de réalisation, il est prévu une commande par câble et moteur hydraulique rotatif du mouvement télescopique du dernier élément,
- suivant un troisième mode de réalisation, il est prévu une commande par crémaillère et pignon denté entraîné par moteur hydraulique rotatif du mouvement télescopique du dernier élément.

Avantageusement, si le dernier élément comporte un tronçon avant (22) et un tronçon arrière (20) plus proche de l'élément précédent, le brin de retour de la bande transporteuse passe successivement sur un rouleau de renvoi (31) solidaire du tronçon avant, qui dévie ledit brin de retour de 180°C environ, puis sur un autre rouleau de renvoi (29) solidaire du tronçon arrière, qui dévie à nouveau le brin de retour de 180° environ.

L'invention va être décrite de façon plus détaillée à l'aide d'un exemple pratique, illustré avec les dessins parmi lesquels :
- Figure 1 est une vue de côté d'un camion-bétonnière équipé du dispositif selon l'invention, en position de transport, et
- Figure 2 est une vue schématique montrant le dispositif en position de travail.
- Figures 3 et 4 sont des vues schématiques montrant le dernier élément dans les situations de rétraction et d'extension.

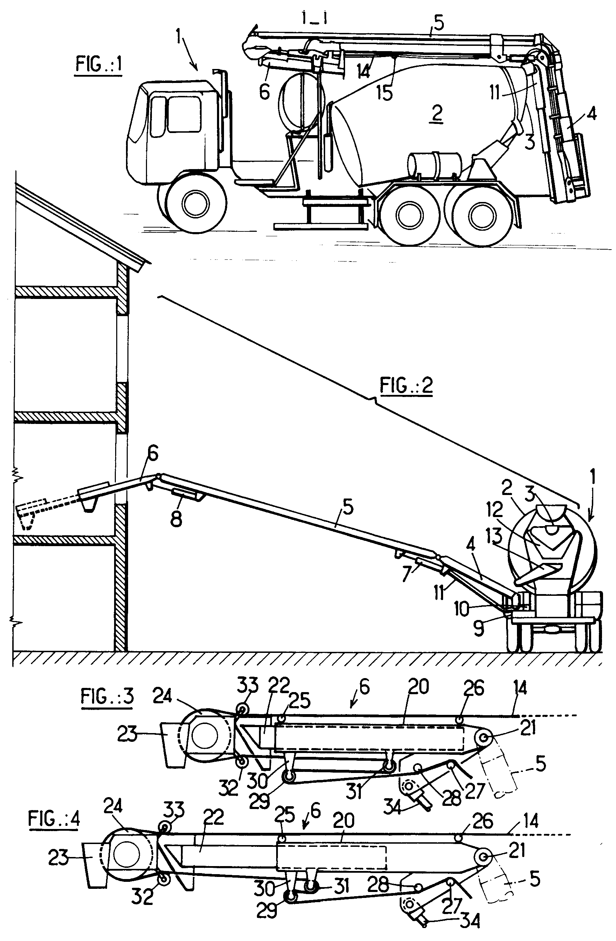

La figure 1 montre un camion 1, équipé, de façon classique, d'une bétonnière 2, constituée par un récipient ayant la forme de deux troncs de cône opposés par leurs bases, ce récipient étant fermé à une extrémité et ouvert à l'extrémité opposée 3, qui constitue un orifice de déversement, l'axe de la bétonnière étant incliné sur l'horizontale d'un angle de l'ordre de 20°, avec l'orifice de déversement situé en partie haute. Comme il est bien connu, la bétonnière comporte intérieurement des ailettes, qui, lorsqu'elles tournent dans un sens autour de son axe, mélangent le béton et lorsqu'elles tournent en sens inverse, entraînent le béton vers l'orifice de déversement.

Le tapis transporteur comporte un châssis qui comprend un premier élément 4, un deuxième élément 5, et un troisième élément 6, articulés entre eux.

Des vérins 7, 8 permettent de modifier l'inclinaison relative des éléments 4, 5 et 6. En outre le premier élément 4 est monté sur une console 9, qui peut tourner autour d'un axe vertical 10 lié au châssis du camion-bétonnière 1. Un autre vérin 11 permet de faire varier l'inclinaison du premier élément 4 par rapport à la console rotative 9.

Sous l'orifice de déversement 3 de la bétonnière, il est prévu un entonnoir fixe 12, qui surplombe une goulotte 13, montée à rotation, et qui transfère le béton jusque sur la partie inférieure du premier élément 4.

Les éléments 4, 5 et 6 supportent, de façon bien connue, une bande transporteuse unique 14, par l'intermédiaire d'un certain nombre de rouleaux 15, dont certains sont disposés à proximité immédiate de chacune des extrémités des éléments 4, 5, 6.

La figure 1 montre le troisième élément 6 replié sous le deuxième élément 5. Il est également possible que, dans la position de transport, le troisième élément soit placé verticalement vers le bas, ou horizontalement en ligne avec le deuxième élément.

La figure 2 montre le tapis en position de déversement du béton à l'intérieur d'un bâtiment, en passant à travers une ouverture de fenêtre de celui-ci. Le fait que le dernier élément 6 est télescopique permet de réduire de façon très importante la hauteur de déversement au bout du tapis. Il ne serait pas possible d'obtenir ce résultat en déplaçant le véhicule porteur ou en modifiant la longueur du deuxième élément 5.

La figure 3 montre le troisième élément 6 dans sa position de rétraction, alors que la figure 4 montre le même élément dans sa position d'extension. L'élément 6 est constitué d'un tronçon arrière 20, relié à l'élément 5, ébauché en trait mixte, par une articulation 21, et un tronçon avant 22, qui porte, à son extrémité, une goulotte de déversement 23. Le tronçon 22 porte en outre un tambour d'extrémité 24 pour la bande transporteuse 14. A sa partie supérieure, le tronçon arrière 20 porte des rouleaux de guidage 25, 26, pour la bande transporteuse, le rouleau 25 étant placé à proximité de l'extrémité avant du tronçon 20, et le rouleau 26 à l'autre extrémité. A la partie inférieure du tronçon 20, on voit deux rouleaux de guidage 27, 28 du brin de retour de la bande 14, ces rouleaux étant placés à proximité de l'extrémité arrière du tronçon 20. En outre, le tronçon arrière porte, près de son extrémité avant, un autre rouleau 29, porté par un support 30 qui l'écarte vers le bas de l'ensemble du tronçon 20. Le tronçon avant 22 porte, à sa partie inférieure, près de son extrémité arrière, un rouleau de renvoi 31, qui se trouve à faible distance au-dessous de la partie inférieure du tronçon arrière 20. Comme on peut mieux le voir sur la figure 4, le brin inférieur de la bande transporteuse passe successivement, en venant du tambour d'extrémité 24, sur le rouleau 31, qui le fait tourner de 180°, puis sur le rouleau 29, qui le fait tourner encore une fois de 180°, avant de rejoindre, par les rouleaux 28 et 27, les autres éléments du transporteur.

Près de son extrémité avant, et du tambour d'extrémité 24, il est prévu également deux rouleaux de guidage 32, 33, portés par le tronçon 22, et qui servent à guider les brins supérieur et inférieur de la bande transporteuse 14.

Comme on peut le constater aisément, grâce au double renvoi à 180°, la longueur totale du trajet de la bande transporteuse 14 n'est pas affectée par le passage de l'élément 6 de la position d'extension à la position rétractée, et réciproquement.

Des moyens pour maintenir la tension de la bande 14 à une valeur constante peuvent être constitués, par exemple, par un rouleau mobile placé entre deux rouleaux fixe et chargé par ressort. Ces moyens sont peu sollicités du fait que la longueur totale du trajet de la bande ne varie que faiblement, c'est-à-dire que, dans le cas d'un rouleau mobile, la course de celle-ci pourra être très réduite.

Un vérin 34, représenté en partie, permet de faire varier l'inclinaison de l'élément 6 par rapport à l'élément intermédiaire 5.

Celui-ci, de façon connue, peut être également conçu comme un élément télescopique.

## Revendications

1. Tapis transporteur adaptable sur un véhicule portant un récipient pour produits granuleux ou pulvérulents, ce récipient comportant un orifice de déversement, et étant par exemple une bétonnière, comportant :
- un châssis constitué d'au moins trois éléments rigides (4, 5, 6) reliés entre eux par des articulations dont les axes sont horizontaux et parallèles entre eux, un premier (4) de ces éléments étant muni de moyens qui lui permettent de pivoter sur un axe vertical lié au véhicule et situé à proximité du point de déversement du récipient, et le dernier (6) de ces éléments de châssis portant, à son extrémité, une trémie ou goulotte de déversement,
- des vérins (7, 8, 11) capables d'agir sur les articulations et entre le véhicule (1) et le premier élément (4) du châssis pour faire passer le châssis d'une position de transport, où il est plié avec le premier, et éventuellement le dernier, élément du châssis vertical ou fortement incliné sur la verticale, et où le tapis ne fait à peu près pas saillie sur le gabarit extérieur du véhicule, à une position de travail, où la trémie ou goulotte de déversement est écartée du véhicule,
- une bande transporteuse continue (14), qui est guidée par des rouleaux (15) montés sur le châssis et placés au moins à chaque extrémité du châssis et à proximité de chaque articulation, l'un de ces rouleaux étant un rouleau d'entraînement de la base,
- et des moyens pour maintenir la bande transporteuse sous une tension à peu près constante,
caractérisé en ce qu'au moins le dernier élément (6) du châssis est télescopique, et peut s'allonger au-delà de la longueur maximale imposée par le gabarit du véhicule quand le châssis est en position de transport.

2. Tapis transporteur selon la revendication 1, caractérisé en ce qu'au moins un autre élément (5) du châssis est également télescopique.

3. Tapis transporteur selon la revendication 1 ou 2, caractérisé en ce qu'il est prévu une commande par vérin hydraulique du mouvement télescopique du dernier élément.

4. Tapis transporteur selon 1 ou 2, caractérisé en ce qu'il est prévu une commande par câble et moteur hydraulique rotatif du mouvement télescopique du dernier élément.

5. Tapis transporteur selon 1 ou 2, caractérisé en ce qu'il est prévu une commande par crémaillère et pignon denté entraîné par moteur hydraulique rotatif du mouvement télescopique du dernier élément.

6. Tapis transporteur selon l'une des revendications 1 à 5, dans lequel le dernier élément comporte un tronçon avant (22) et un tronçon arrière (20) plus proche de l'élément précédent, caractérisé en ce que le brin de retour de la bande transporteuse passe successivement sur un rouleau de renvoi (31) solidaire du tronçon avant, qui dévie ledit brin de retour de 180° environ, puis sur un autre rouleau de renvoi (29) solidaire du tronçon arrière, qui dévie à nouveau le brin de retour de 180° environ.

## Claims

1. A conveyor for use on a vehicle carrying a container for granular or powder products, the container having a tipping orifice, and being for example a concrete mixer, including:
- a frame made up of at least three rigid members (4, 5, 6) hinged together about parallel horizontal axes, a first of these members (4) having means enabling it to pivot on a vertical axis fixed relative to the vehicle and near the tipping point of the container, and the last of these frame members (6) carrying a tipping chute or hopper at its end,
- rams (7, 8, 11) adapted to act on the hinges and between the vehicle (1) and the first frame member (4) to move the frame from a transport position in which it is folded with the first frame member and possibly the last frame member vertical or steeply inclined to the vertical and in which the conveyor does not project significantly from the exterior profile of the vehicle, to a working position in which the tipping chute or hopper is moved away from the vehicle,
- a continuous conveyor belt (14) guided by rollers (15) mounted on the frame and disposed at least at each end of the frame and near each hinge, one of the rollers being a base drive roller, and
- means for maintaining the conveyor belt at a substantially constant tension,
characterised in that at least the last frame member (6) is telescopic and can be extended beyond a maximal length imposed by the profile of the vehicle when the frame is in the transport position.

2. A conveyor according to claim 1 characterised in that at least one other frame member (5) is also telescopic.

3. A conveyor according to claim 1 or claim 2 characterised in that the telescopic movement of the last member is driven by a hydraulic ram.

4. A conveyor according to claim 1 or claim 2 characterised in that the telescopic movement of the last member is driven by a cable and a rotary hydraulic motor.

5. A conveyor according to claim 1 or claim 2 characterised in that the telescopic movement of the last member is driven by a rack and toothed pinion driven by a rotary hydraulic motor.

6. A conveyor according to any one of claims 1 to 5 wherein the last member has a front section (22) and a rear section (20) nearer the preceding member, characterised in that the return run of the conveyor belt passes successively over an idler roller (31) attached to the front section which diverts said return run approximately 180° and then over another idler roller (29) attached to the rear section which again diverts the return run approximately 180°.

## Patentansprüche

1. Bandförderer für ein Fahrzeug, das einen Behälter für Granulat- oder pulverförmige Produkte trägt, wobei der Behälter eine Abgabeöffnung aufweist und beispielsweise ein Betonmischer ist, mit:
- einem Chassis, das aus mindestens drei starten Elementen (4,5,6) gebildet wird, welche untereinander durch Gelenke verbunden sind, deren Achsen horizontal und parallel zueinander verlaufen, wobei ein erstes (4) dieser Elemente mit Mitteln versehen ist, welche sein Verschwenken um eine mit dem Fahrzeug verbundene vertikale Achse ermöglichen und in der Nähe des Abgabepunktes des Behälters angeordnet sind, und das letzte (6) der Elemente des Chassis an seinem Ende einen Abgabetrichter oder eine Abgaberutsche trägt,
- Stellzylinder (7,8,11) die in der Lage sind, auf die Gelenke sowie zwischen dem Fahrzeug (1) und dem ersten Element (4) des Chassis zu wirken, um das Chassis aus einer Transportstellung, in der es mit dem ersten und gegebenenfalls letzten Element des Chassis vertikal oder sehr stark geneigt zur Vertikalen angeordnet ist und in der der Förderer praktisch nicht über die Außenkontur des Fahrzeugs vorsteht, in einer Arbeitsstellung, in der der Abgabetrichter bzw. die Abgaberutsche vom Fahrzeug entfernt ist, zu verstellen,
- einem kontinuierlichen Transportband (14), das durch Rollen (15) geführt ist, die an dem Chassis gelagert und mindestens an jedem Ende des Chassis sowie in der Nähe jedes Gelenkes angeordnet sind, wobei eine der Rollen eine Rolle zum Antrieb des Bandes ist,
- und Mitteln, die das Transportband unter praktisch konstanter Spannung halten,
dadurch gekennzeichnet, daß zumindest das letzte Element (6) des Chassis teleskopierbar ist und in der Transportstellung des Chassis über die durch die Außenkontur des Fahrzeugs vorgegebene maximale Länge hinaus verlängerbar ist.

2. Bandförderer nach Anspruch 1, dadurch gekennzeichnet, daß mindestens ein weiteres Element (5) des Chassis ebenfalls teleskopierbar ist.

3. Bandförderer nach Anspruch 1 oder 2, dadurch gekennzeichnet, daß
eine Hydraulikzylinder-Steuerung der Teleskopbewegung des letzten Elementes vorgesehen ist.

4. Bandförderer nach Anspruch 1 oder 2, dadurch gekennzeichnet, daß eine aus Seil und hydraulischem Drehmotor bestehende Steuerung der Teleskopbewegung des letzten Elementes vorgesehen ist.

5. Bandförderer nach Anspruch 1 oder 2, dadurch gekennzeichnet, daß eine von einer Zahnstange und einem durch einen hydraulischen Drehmotor angetriebenen Ritzel gebildete Steuerung der Teleskopbewegung des letzten Elementes vorgesehen ist.

6. Bandförderer nach einem der Ansprüche 1 bis 5, bei dem das letzte Element ein vorderes Teil (22) und ein dem vorhergehenden Element nächstes hinteres Teil (20) aufweist, dadurch gekennzeichnet, daß das Rücklauftrum des Förderbandes nacheinander um eine mit dem vorderen Teil fest verbundene Umlenkrolle (31), die das Rücklauftrum um ungefähr 180° umlenkt, dann um eine mit dem hinteren Teil fest verbundene weitere Umlenkrolle (29), die das Rücklauftrum erneut um ungefähr 180° umlenkt, läuft.
